**Europäisches Patentamt**

**European Patent Office**

**Office européen des brevets**

(19)

(11) Veröffentlichungsnummer : **0 035 256**
**B1**

(12) **EUROPÄISCHE PATENTSCHRIFT**

(45) Veröffentlichungstag der Patentschrift :
**13.07.83**

(21) Anmeldenummer : **81101446.3**

(22) Anmeldetag : **27.02.81**

(51) Int. Cl.³ : **B 01 J 20/28**, H 01 H 9/02,
H 01 L 23/26, H 05 H 5/06

(54) **Getterkörper und Verfahren zu dessen Herstellung.**

(30) Priorität : **04.03.80 DE 3008290**
**15.01.81 DE 3101128**

(43) Veröffentlichungstag der Anmeldung :
**09.09.81 Patentblatt 81/36**

(45) Bekanntmachung des Hinweises auf die Patenterteilung : **13.07.83 Patentblatt 83/28**

(84) Benannte Vertragsstaaten :
**CH FR GB IT LI SE**

(56) Entgegenhaltungen :
**DE A 2 320 618**
**DE C 971 154**
**FR A 2 368 205**
**GB A 1 027 430**
**GB A 1 308 762**
**US A 2 885 368**
**US A 2 991 201**
**US A 3 446 645**
**US A 4 061 807**

**CHEMICAL ABSTRACTS, Band 80, Nr. 24, 17. Juni
1974, Seite 366, Nr. 138489z Columbus, Ohio,
U.S.A.**

(73) Patentinhaber : **SIEMENS AKTIENGESELLSCHAFT**
**Berlin und München Wittelsbacherplatz 2**
**D-8000 München 2 (DE)**

(72) Erfinder : **Esterl, Robert**
**Nr. 10**
**D-8019 Reinstorf (DE)**
Erfinder : **Weiser, Josef, Dr. Dipl.-Phys.**
**Benediktstrasse 9**
**D-8021 Hohenschäftlarn (DE)**

## Getterkörper und Verfahren zu dessen Herstellung

Die Erfindung bezieht sich auf einen Getterkörper zum Einsatz in gekapselten elektrischen Bauelementen in Form einer gepreßten Tablette mit einem wesentlichen Bestandteil eines an sich bekannten Getterstoffes, wie Aktivkohle, Zeolith oder dgl. Außerdem bezieht sich die Erfindung auf ein Verfahren zur Herstellung eines derartigen Getterkörpers.

Elektrische Bauelemente, wie Relais, werden vielfach hermetisch gekapselt, um die Kontakte vor schädlichen Umwelteinflüssen zu schützen. Allerdings ist es auch dabei im allgemeinen nicht zu vermeiden, daß restliche Schadgase und Dämpfe im Innenraum verbleiben oder dort erst noch entstehen und sich negativ auf die Funktionsfähigkeit des Bauelementes auswirken. Zur Absorption solcher schädlicher Stoffe ist es auch bereits seit langem üblich, Getterkörper im Gehäuse mit einzuschließen (DE-A 23 20 618). Solche Getterstoffe, die die Lebensdauer und Zuverlässigkeit von Relais und anderen Bauelementen erhöhen, sind bekannt, wie beispielsweise Aktivkohle, Zeolith und andere. Diese Getterstoffe werden meistens in Tablettenform gepreßt und dann im Inneren des Bauelementes an die Gehäusewand geklebt oder mit geeigneten Vorrichtungen befestigt. Dabei kommt es darauf an, daß die Gettertabletten möglichst große poröse Oberflächen besitzen. Gerade in der porösen Konsistenz der Getterstoffe liegt aber auch ein Nachteil begründet. Denn diese Gettermaterialien neigen zum Abbröckeln, und insbesondere bei Erschütterungen des Bauelementes besteht die Gefahr, daß Staubpartikel des Getterstoffes an die Kontakte gelangen und dort gerade das verursachen, was sie verhindern sollen, nämlich eine Verunreinigung der Kontaktoberflächen.

Aufgabe der Erfindung ist es, einen Getterkörper zu schaffen, in welchem das Gettermaterial sein Absorptionsvermögen voll entfalten kann, der aber gleichzeitig weitgehend abriebfest ist.

Erfindungsgemäß besteht ein derartiger Getterkörper aus einem Pulvergemisch mit einem Anteil von bis zu 70 Gew.% des Getterstoffes, etwa 10 Gew.% Aluminiumstearat sowie einem Rest, wobei der Rest entweder völlig durch Kunststoffe oder durch einen Kunststoff und ein Alkalisilikat gebildet ist. Durch die erfindungsgemäßen Zusätze von Kunststoff und Aluminiumstearat wird gewährleistet, daß die gepreßten Gettertabletten weitgehend abriebfest sind. Diese Getterkörper können in jeder geometrischen Form durch Pressen des pulverförmigen Gemisches hergestellt werden. Sie können problemlos als Schüttgut weiterverarbeitet und in verschiedenste Bauelemente eingesetzt werden, ohne daß durch abbröckelnde Partikel die Funktion des Bauelementes gestört wird.

Der einen oder mehrere Kunststoffe enthaltende Rest in dem erfindungsgemäßen Pulvergemisch des Getterkörpers kann je nach Anwendungsfall zwischen 20 und 80 Gew.% variieren. Dieser Rest kann entweder völlig aus Kunststoffen bestehen, wobei er zweckmäßigerweise zu etwa 10 Gew.% aus Polycarbonat und zu etwa 90 Gew.% aus Polyamid zusammengesetzt ist. In einer anderen vorteilhaften Ausführungsform kann anstelle von Polycarbonat ein Alkalisilikat verwendet werden, so daß dann der erwähnte Rest zu etwa 10 Gew.% aus Alkalisilikat und zu etwa 90 Gew.% aus Polyamid besteht.

Ein vorteilhaftes Verfahren zur Herstellung des erfindungsgemäßen Getterkörpers besteht darin, daß zunächst der Getterstoff in Pulverform in eine Lösung, beispielsweise in eine Polycarbonatlösung, zur Bildung eines ersten Gemisches eingebracht wird, daß dieses erste Gemisch getrocknet und wieder zu Pulver zermahlen wird, daß das Pulver des ersten Gemisches mit Polyamidpulver und Aluminiumstearat zur Bildung eines zweiten Gemisches vermengt wird und daß schließlich aus diesem zweiten Gemisch die Tabletten gepreßt werden. In diesem Fall enthält also der fertige Getterkörper die Kunststoffe Polyamid und Polycarbonat. Dabei kann als Lösungsmittel für das Polycarbonat Methylenchlorid verwendet werden.

Allerdings hat Methylenchlorid wie auch andere für Kunststoffe in Betracht kommende Lösungsmittel den Nachteil, daß es bei der Verarbeitung unter Umständen eine Geruchsbelästigung und wegen ihrer Giftigkeit auch eine gewisse Gesundheitsgefährdung für die damit befaßten Menschen darstellen. Aus diesem Grunde ist es für bestimmte Anwendungsfälle zweckmäßig, anstelle der Polycarbonatlösung eine Wasserglaslösung (Kalium-Natrium-Silikat-Lösung) zu verwenden, welche geruchlos und ungiftig ist. Der fertige Getterkörper enthält also in diesem Fall lediglich Polyamid als Kunststoff und dazu das entsprechende Alkalisilikat. Ansonsten ist das Herstellungsverfahren genauso wie im vorhergehenden Fall.

Zweckmäßig ist es weiterhin, vor dem Pressen der Tabletten das zweite Gemisch zu trocknen, was durch Erwärmen auf eine Temperatur von etwa 60 °C geschehen kann. Vorteilhafterweise werden die gepreßten Tabletten in einem weiteren Verfahrensschritt ausgehärtet, und zwar bei Temperaturen von etwa 200 °C. Außerdem ist es noch zweckmäßig, die fertigen Getterkörper nach dem Brennen bzw. Aushärten zu trovalisieren, um Grate oder nicht festhaftende Partikel von der Oberfläche zu entfernen und aneinanderhaftende Getterkörper zu trennen. Zu diesem Zweck werden zweckmäßigerweise Dreikantsteine zusammen mit den Getterkörpern und mit Wasser in die Trommel gegeben.

Die so erhaltenen Getterkörper besitzen sehr gute abriebfeste Oberflächen, ohne daß ein nennenswerter Verlust der Getterwirkung eintritt. In üblicher Weise werden die Getterkörper durch Ausheizen vor oder nach dem Einbau in das

betreffende Bauelement aktiviert.

## Ansprüche

1. Getterkörper zum Einsatz in gekapselten elektrischen Bauelementen in Form einer gepreßten Tablette mit einem wesentlichen Bestandteil eines an sich bekannten Getterstoffes, wie Aktivkohle, Zeolith oder dgl., dadurch gekennzeichnet, daß der Getterkörper aus einem Pulvergemisch mit einem Anteil von bis zu 70 Gew.% des Getterstoffes, etwa 10 Gew.% Aluminiumstearat sowie einem Rest besteht, wobei der Rest entweder völlig durch Kunststoffe oder durch einen Kunststoff und ein Alkalisilikat gebildet ist.

2. Getterkörper nach Anspruch 1, dadurch gekennzeichnet, daß der Rest zwischen 20 und 80 Gew.% beträgt.

3. Getterkörper nach Anspruch 1 oder 2, dadurch gekennzeichnet, daß der Rest etwa zu 10 Gew.% aus Polycarbonat und etwa zu 90 Gew.% aus Polyamid besteht.

4. Getterkörper nach Anspruch 1 oder 2, dadurch gekennzeichnet, daß der Rest etwa zu 10 Gew.% aus Alkalisilikat und etwa zu 90 Gew.% aus Polyamid besteht.

5. Verfahren zur Herstellung eines Getterkörpers nach Anspruch 1, dadurch gekennzeichnet, daß der Getterstoff in Pulverform in eine Polycarbonatlösung zur Bildung eines ersten Gemisches eingebracht wird, daß dieses erste Gemisch getrocknet und wiederum zu Pulver zermahlen wird, daß das Pulver des ersten Gemisches mit Polyamidpulver und Aluminiumstearat zur Bildung eines zweiten Gemisches vermengt wird und daß schließlich aus diesem zweiten Gemisch die Tabletten gepreßt werden.

6. Verfahren zur Herstellung eines Getterkörpers nach Anspruch 1, dadurch gekennzeichnet, daß der Getterstoff in Pulverform in eine Wasserglaslösung zur Bildung eines ersten Gemisches eingebracht wird, daß dieses erste Gemisch getrocknet und wiederum zu Pulver zermahlen wird, daß das Pulver des ersten Gemisches mit Polyamidpulver und Aluminiumstearat zur Bildung eines zweiten Gemisches vermengt wird und daß schließlich aus diesem zweiten Gemisch die Tabletten gepreßt werden.

7. Verfahren nach Anspruch 5 oder 6, dadurch gekennzeichnet, daß das zweite Gemisch vor dem Pressen unter Erwärmung auf etwa 60 °C getrocknet wird.

8. Verfahren nach einem der Ansprüche 5 bis 7, dadurch gekennzeichnet, daß die gepreßten Tabletten bei Temperaturen von etwa 200 °C ausgehärtet werden.

9. Verfahren nach einem der Ansprüche 5 bis 8, dadurch gekennzeichnet, daß die fertigen Tabletten in einer Trommel entgratet werden.

## Claims

1. A getter body for inserting into an encased electrical component in the form of a compressed tablet with a substantial content of a getter substance which is known *per se*, such as activated carbon, zeolite, or the like, characterised in that the getter body consists of a powder mixture having a portion of up to 70 % by weight of the getter material, approximately 10 % by weight of aluminium stearate and a residue, the residue being formed either wholly of synthetic resins, or by a synthetic resin and an alkali silicate.

2. A getter body as claimed in Claim 1, characterised in that the residue amounts to between 20 and 80 % by weight.

3. A getter body as claimed in Claim 1 or Claim 2, characterised in that the residue consists of approximately 10 % by weight of polycarbonate and of approximately 90 % by weight of polyamide.

4. A getter body as claimed in Claim 1 or Claim 2, characterised in that the residue consists of approximately 10 % by weight of alkali silicate and of approximately 90 % by weight of polyamide.

5. A process for the production of a getter body as claimed in Claim 1, characterised in that the getter substance is introduced in the form of powder into a polycarbonate solution in order to form a first mixture ; that the first mixture is dried and finely ground to form a powder ; that the powdered first mixture is mixed with polyamide powder and aluminium stearate to form a second mixture ; and that the tablets are finally pressed from the second mixture.

6. A process for the production of a getter body as claimed in Claim 1, characterised in that the getter substance is introduced into a water glass solution in the form of powder in order to form a first mixture ; that the first mixture is dried and finely ground to form a powder ; that the powdered first mixture is mixed with polyamide powder and aluminium stearate to form a second mixture ; and that the tablets are finally pressed from the second mixture.

7. A process as claimed in Claim 5 or Claim 6, characterised in that, prior to the pressing operation, the second mixture is dried by heating to about 60 °C.

8. A process as claimed in one of Claims 5 to 7, characterised in that the pressed tablets are hardened at temperatures of about 200 °C.

9. A process as claimed in one of Claims 5 to 8, characterised in that the finished tablets are deburred in a drum.

## Revendications

1. Corps de getter pour sa mise en œuvre dans des composants électriques encapsulés, sous la forme d'une pastille moulée avec une partie constitutive essentielle d'une substance de getter connue en elle-même, comme le charbon actif, la zéolite ou analogues, caractérisé par le fait que le corps de getter est constitué par un mélange pulvérulent ayant jusqu'à 70 % en poids de substance de getter, environ 10 % en poids de stéarate d'aluminium ainsi qu'un reste, ledit reste étant constitué soit entièrement par des matières plastiques soit par une matière plastique et un silicate de métal alcalin.

2. Corps de getter selon la revendication 1, caractérisé par le fait que le reste est de 20 à 80 % en poids.

3. Corps de getter selon la revendication 1 ou 2, caractérisé par le fait que le reste est constitué pour environ 10 % en poids d'un polycarbonate et environ 90 % en poids d'un polyamide.

4. Corps de getter selon la revendication 1 ou 2, caractérisé par le fait que le reste est constitué par environ 10 % en poids de silicate de métal alcalin et environ 90 % en poids de polyamide.

5. Procédé pour la préparation d'un corps de getter selon la revendication 1, caractérisé par le fait que la substance de getter est introduite sous forme pulvérulente dans une solution de polycarbonate pour former un premier mélange, que ce premier mélange est séché et est ensuite broyé sous la forme d'une poudre, que la poudre du premier mélange est mélangée avec de la poudre de polyamide et avec un stéarate d'aluminium pour former un second mélange et que finalement à partir de ce second mélange on moule les pastilles.

6. Procédé pour la fabrication d'un corps de getter selon la revendication 1, caractérisé par le fait que la substance de getter sous forme poudreuse est introduite dans une solution de verre soluble pour former un premier mélange, que ce premier mélange est séché et est à nouveau broyé en une poudre, que la poudre du premier mélange est mélangée à de la poudre de polyamide et à un stéarate d'aluminium en vue de former un second mélange et que finalement les pastilles sont moulées à partir de ce second mélange.

7. Procédé selon la revendication 5 ou 6, caractérisé par le fait que le second mélange est séché avant le moulage, avec chauffage à environ 60 °C.

8. Procédé selon l'une des revendications 5 à 7, caractérisé par le fait que les pastilles moulées sont durcies à des températures d'environ 200 °C.

9. Procédé selon l'une des revendications 5 à 8, caractérisé par le fait que les pastilles terminées sont ébarbées dans un tambour.